Europäisches Patentamt

European Patent Office

Office européen des brevets

(11) Veröffentlichungsnummer: **0 024 671**

**A1**

(12) # EUROPÄISCHE PATENTANMELDUNG

(21) Anmeldenummer: **80104912.3**

(22) Anmeldetag: **18.08.80**

(51) Int. Cl.³: **G 21 D 3/04**
**G 21 C 17/00**

(30) Priorität: **30.08.79 DE 2935108**

(43) Veröffentlichungstag der Anmeldung:
**11.03.81 Patentblatt 81/10**

(84) Benannte Vertragsstaaten:
**CH DE FR LI**

(71) Anmelder: **KRAFTWERK UNION
AKTIENGESELLSCHAFT
Wiesenstrasse 35
D-4330 Mülheim (Ruhr)(DE)**

(72) Erfinder: **Mertens, Uwe, Dipl.-Phys.
Falkenstrasse 40
D-8520 Erlangen(DE)**

(72) Erfinder: **Aleite, Werner, Dipl.-Ing.
Sieglitzhofer Strasse 34
D-8520 Erlangen(DE)**

(72) Erfinder: **Bock, Heinz-Wilhelm, Dr.
In der Reuth 178
D-8520 Erlangen(DE)**

(74) Vertreter: **Mehl, Ernst, Dipl.-Ing.
Postfach 22 01 76
D-8000 München 22(DE)**

(54) **Prüfeinrichtung.**

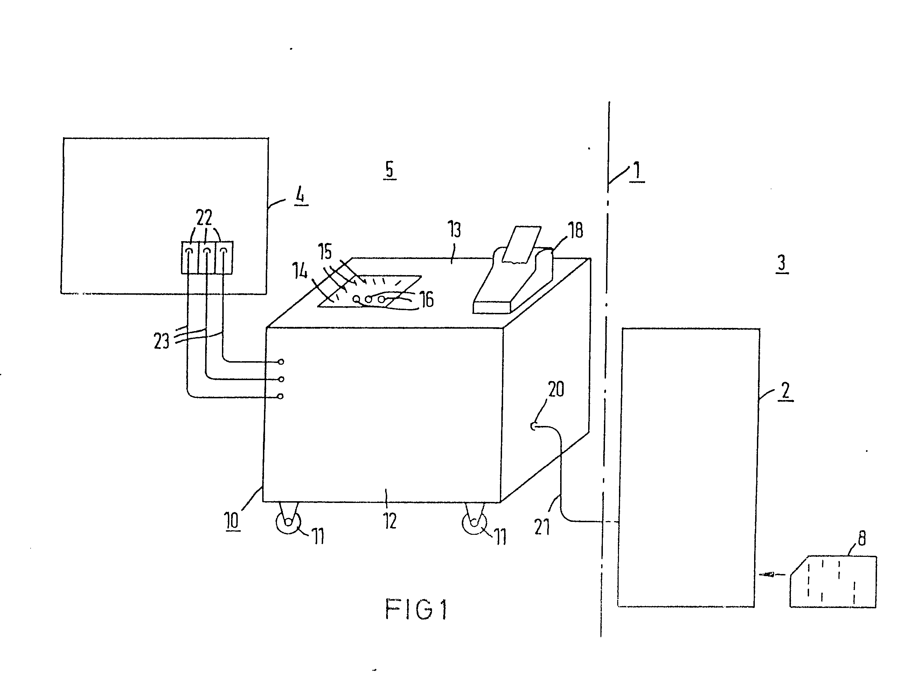

(57) Zum Prüfen der Funktionen elektronischer Meß-, Regel- und Schutzeinrichtungen (4) kann man Rechner (2) als Prüfautomaten einsetzen. Für die mehrkanalig ausgeführten und räumlich getrennt untergebrachten Schutzeinrichtungen (4, 4', 4'', 4''') eines Kernkraftwerkes ist dabei ein transportables Peripheriegerät (10) zwischengeschaltet, das mit dem Prüfling (4) über Kabel (23) mit Steckern (105 bis 108) verbunden werden kann, eine Protokollierungseinrichtung (16) aufweist und einen Speicher enthält, der den Stand des Prüfprogramms beim Auftreten eines Fehlers festhält. Danach werden handbetätigte Steuermittel (72) des Peripheriegerätes (10) zur schrittweisen Prüfung betätigt, um Fehler des Prüflings (4) zu finden (Fig. 1).

./...

EP 0 024 671 A1

FIG1

KRAFTWERK UNION AKTIENGESELLSCHAFT     Unser Zeichen

VPA 79 P 9 3 4 6 EUR

## Prüfeinrichtung

Die Erfindung betrifft eine Prüfeinrichtung zum Prüfen der Funktionen elektronischer Meß-, Regel- und Schutzeinrichtungen (Prüfling), die in einem Kraftwerk, insbesondere einem Kernkraftwerk, in mehrkanalig redundanter Anordnung räumlich getrennt untergebracht sind, mit einem Rechner. Solche elektronischen Einrichtungen sind zum Beispiel in der Zeitschrift "Atomkernenergie Kerntechnik" 1979, Lieferung 1, Seiten 51 bis 56, beschrieben.

Bekannte Prüfsysteme, wie sie zum Beispiel in den Firmen-Druckschriften "GEATEST 200 Automatisches Prüfsystem", "PEGAMAT-System Prüfautomaten für die Nachrichtentechnik und Elektronik", "PEGAMAT-Hybrid-Prüfsystem M 1045", und "SPS, das modulare Siemens-Prüfsystem" beschrieben sind, sind nur für elektronische Einrichtungen verhältnismäßig kleiner Abmessungen vor-

Sm 2 Hgr / 9.8.1979

0024671

gesehen, zum Beispiel zum Prüfen von einzelnen Mikro-Computer-Chips. Jedenfalls werden diese Einrichtungen üblicherweise an den festinstallierten Prüfplatz herangebracht. Dieser kann zwar in Grenzen variiert werden, zum Teil auch unter Verwendung von Prüfsprachen. Dabei spielen jedoch weder der Zeitpunkt der Prüfung noch im Grunde die Prüfzeit eine entscheidende Rolle. Anders ist es in Kernkraftwerken, wo die Prüfung von Schutzeinrichtungen zur Einhaltung von Sicherheitsbestimmungen vorgeschrieben ist. Hier sind durch die räumlich getrennte Anordnung von redundanten Prüfeinrichtungen andere Verhältnisse gegeben. Hinzu kommt, daß die Prüfungen zeitlich in so kurzen Abständen wiederholt werden müßten, daß sie nicht auf die normalen Stillstandszeiten des Kernkraftwerkes, zum Beispiel beim Brennelementwechsel, beschränkt werden können. Dies bedeutet, daß eine Prüfung während des normalen Reaktorbetriebes vorgenommen werden muß, ohne daß die Sicherheit darunter leiden darf.

Aufgabe der Erfindung ist demnach die besondere Ausgestaltung einer Prüfeinrichtung der oben genannten Art, um mit einfachen Mitteln unter Ausnutzung der in einem Kernkraftwerk vorhandenen Möglichkeiten eine Prüfung zu ermöglichen, die den Betrieb des Kernkraftwerkes möglichst wenig beeinträchtigt.

Gemäß der Erfindung ist vorgesehen, daß zwischen dem Rechner und dem Prüfling ein transportables Peripheriegerät angeordnet ist, das mit dem Prüfling über ein mit Steckern versehenes Kabel verbunden ist, daß das Peripheriegerät mit dem Rechner zur Übertragung eines Prüfprogramms über ein Bus-System mit mindestens einem Adressen- und mindestens einem Datenbus und mit Über-

- 3 -    VPA 79 P 9 3 4 6 EUR

spannungsschutzeinrichtungen verbunden ist und eine Protokollierungseinrichtung für das Prüfprogramm aufweist, daß das Peripheriegerät einen Speicher enthält, der den Stand des Prüfprogramms beim Auftreten eines Fehlers festhält, und daß im Peripheriegerät handbetätigte Steuermittel zur schrittweisen Prüfung des Prüflings bei Unterbrechung des Prüfprogramms vorgesehen sind.

Bei der Erfindung wird ein kleiner Prozeßrechner dazu benutzt, das Prüfprogramm zu liefern. Dieser Rechner ist üblicherweise getrennt von den redundanten Schutzeinrichtungen angeordnet. Deshalb wird er über Kabel mit jeweils einem der redundanten Prüflinge verbunden. In die Verbindung wird ein Peripheriegerät eingeschaltet, das an den Ort des Prüflings transportiert wird. Das Peripheriegerät liefert die gewünschten Prüfsignale nach dem vom Prozeßrechner stammenden Prüfprogramm. Mit dem Peripheriegerät wird dann nach dem Auftreten eines Fehlers eine Handbetätigung ermöglicht, die eine genaue Lokalisierung des Fehlers gestattet. Dabei wird mit der Protokollierungseinrichtung der Ablauf der Fehlersuche, unter Umständen auch der vorhergehende Teil der Prüfung, festgehalten. Außerdem kann die Protokollierungseinrichtung auch für den Fall, daß keine Fehler vorhanden sind, einen Nachweis für die Fehlerfreiheit darstellen.

Die dem Prüfling zugeordneten Stecker können vorteilhaft mindestens einen Kennungsstift zur Übertragung eines codierten Kennungssignals aufweisen. Damit wird sichergestellt, daß die Prüfung nur in zulässiger Weise, d.h. ohne Beeinträchtigung des Reaktorbetriebes, vorgenommen wird. Zum Beispiel kann damit der normale Ausgang des Prüflings gesperrt werden, damit
weder vom Prüfprogramm noch durch damit verbundene
Ausgangssignale des Prüflings in den Reaktorbetrieb
eingegriffen wird. Ferner kann mit dem Kennungssignal
bewirkt werden, daß über Schalter eine Anzeigeeinrichtung betätigt wird, die in der Warte für den Betrieb
des Kernkraftwerkes anzeigt, welcher Teil der redundanten Prüfeinrichtungen für die Prüfung außer Betrieb
genommen wird.

In allen zur Einspeisung dienenden Verbindungsleitungen
zwischen dem Peripheriegerät und dem Prüfling kann
ein Schalter angeordnet sein. Diese Schalter können bei
einer Störung im Peripheriegerät oder im Rechner öffnen, damit weitere Schäden vermieden werden oder der
schadhafte Zustand besser zu ermitteln ist. Die
Schalter können im Peripheriegerät angeordnet sein.

Der Rechner, der als Steuerungsrechner bereits in großem Umfang Programme (soft ware) enthält, die auch
für die Prüfung verwendet werden können, kann mit den
einzelnen Stellen der räumlich getrennten Prüflinge
über Kabel verbunden sein, die in Steckplätzen für den
Anschluß des Peripheriegerätes an dieser Stelle enden.
Dabei ist für 4-fach redundant vorgesehene Prüflinge
vorteilhafterweise nur ein einziges Peripheriegerät
vorgesehen, weil man damit erreichen kann, daß von den
vier Prüflingen nur ein einzelner geprüft wird und damit
für den normalen Betrieb ausfällt, während die drei verbleibenden Redundanzen für die Zeit der Prüfung den
Anforderungen der Sicherheit genügen.

Die Prüfeinrichtung kann in einem Fahrgestell angeordnet sein, dessen Deckplatte ein Bedienfeld für automatischen Prüfbetrieb und ein Bedienfeld für Handbetrieb
aufweist, dessen Tastatur an den dem Prüfling zugeordneten Steckern Testspannungen einzuspeisen oder abzufragen gestattet. Dabei kann die Deckplatte ferner einen
Blattschreiber als Protokollierungseinrichtung tragen.
Andere Möglichkeiten zur Protokollierung umfassen
magnetische oder elektronische Aufzeichnungen, die gegebenenfalls später abgedruckt oder aufgezeichnet werden. Außerdem kann das Peripheriegerät Steckplätze für
die dem Prüfling zugeordneten Stecker aufweisen. Diesen
Steckplätzen kann dann eine Überwachungsschaltung zugeordnet sein, die beim Einstecken der Stecker wirksam
wird. Auf diese Weise erreicht man, daß die Fehlerfreiheit des Peripheriegerätes selbst überwacht wird.

Zur näheren Erläuterung der Erfindung wird anhand der
beiliegenden Zeichnung ein Ausführungsbeispiel beschrieben. Dabei zeigt die Fig. 1 in schematischer
Darstellung ein Peripheriegerät nach der Erfindung,
Fig. 2 ein Blockschaltbild des bei der Erfindung verwendeten Prüfrechners, Fig. 3 die Verbindung des Prüfrechners mit den redundant angeordneten Prüflingen und
Fig. 4 ein Blockschaltbild des Peripheriegerätes.

In Fig. 1 ist mit der strichpunktierten Linie 1 angedeutet, daß der Prüfrechner 2 in einem anderen Raum
3 als der Prüfling 4 angeordnet ist, dessen Raum mit 5
bezeichnet ist. Üblicherweise wird der Prüfrechner in
einem sogenannten Rechnerraum aufgestellt, der in der
Nähe der Warte, jedenfalls in einem gut klimatisierten
und geschützten Gebäudeteil, untergebracht sein kann.
Dabei kann der sogenannte Prüfrechner ein Großrechner
sein, wie er für die Führung eines Kernkraftwerkes
ohnehin benötigt wird. Für seinen Einsatz als Prüfrechner wird er mit einem Prüfprogramm versehen. In der Fig. 1 ist dies durch die schematisch dargestellte Lochkarte 8 angedeutet.

Die zu prüfende Funktion 4 ist ein Schutzsystem, das zum Beispiel in Form eines Mikroprozessors ausgebildet ist. Es sorgt dafür, daß die beim Betrieb des Druckwasserreaktors einzuhaltenden Grenzwerte zum Beispiel im Hinblick auf die Größen Kühlwassertemperatur, Kühlwasserdruck, örtliche und gesamte Leistung, Neutronenfluß usw. eingehalten werden und daß bei Überschreiten der Grenzen gestuft Gegenmaßnahmen eingeleitet werden. Zu solchen Maßnahmen zählt zum Beispiel das Einfahren von Steuerstäben mit neutronenabsorbierendem Material, um die Leistungsentwicklung im Reaktor herabzusetzen.

Das Peripheriegerät 10 ist äußerlich ein mit Rädern 11 versehenes Fahrgestell 12 mit den Abmessungen 100 cm Höhe, 60 cm Breite, 130 cm Länge, das eine Deckplatte 13 mit Bedienungseinrichtungen aufweist. Zu den Bedienungseinrichtungen zählt ein Bedienfeld 14 mit den in der Figur angedeuteten Schaltern 15 und Tasten 16, die von Hand einen Eingriff in das vom Prüfrechner 2 gelieferte Prüfprogramm ermöglicht.

Auf der Deckplatte 13 sitzt ferner ein Blattschreiber 18 als Protokollierungseinrichtung. Ferner besitzt das Peripheriegerät 10 einen Steckanschluß 20 für ein etwa 100 m langes Kabel 21, das das Peripheriegerät 10 mit dem Prüfrechner 2 verbindet. Das Kabel kann zum Beispiel fest verlegt sein und nur in seinem dem Peripheriegerät 10 unmittelbar benachbarten Bereich als flexibles Kabel mit einem Stecker ausgebildet sein.

Zur Verbindung mit dem Prüfling 4 sind an diesem Steckplätze 22 vorgesehen. Dort können bis zu 16 Kabel 23 angeschlossen werden, von denen nur drei gezeichnet sind und die die Verbindung zum Peripheriegerät 10 herstellen. Die Kabel 23 sind im Gegensatz zu der vereinfachten Darstellung der Fig. 1 vieladrig ausgeführt. Sie können zum Beispiel mit jeweils 2 x 16 Steckstiften ausgerüstet sein und für die Übertragung von binär codierten Signalen eingesetzt werden.

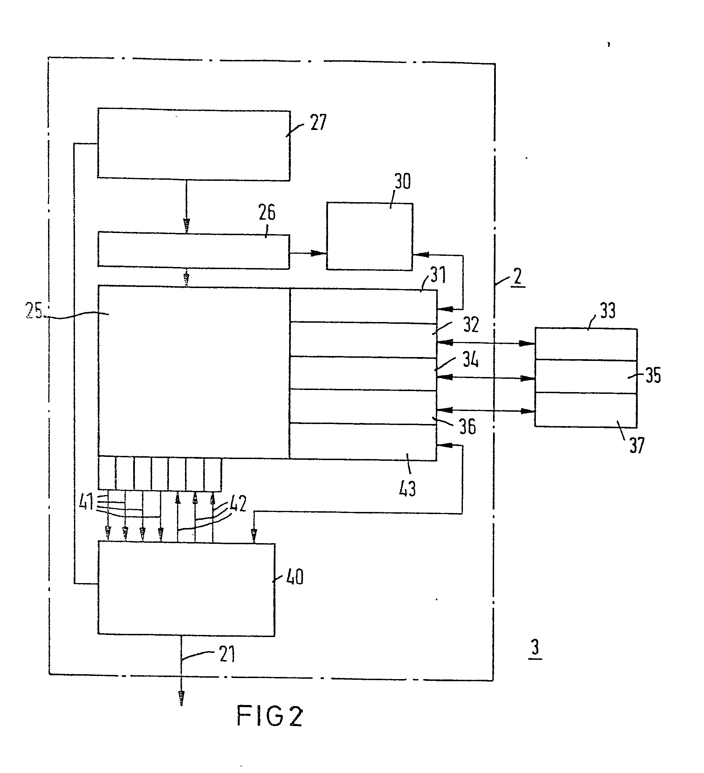

Der Prüfrechner 2 ist, wie Fig. 2 zeigt, beim Ausführungsbeispiel mit einem kleinen Prozeßrechner 25 der Type Siemens 310K ausgerüstet und mit einem 64K Halbleiterspeicher bestückt, der nicht weiter dargestellt ist. Er wird von einer Stromversorgung 26 bei einer Spannung von 24V mit Strom versorgt. Die Stromversorgung 26 wird ihrerseits über eine Schrankeinspeisung 27 versorgt, die über Dioden entkoppelte Baterien umfaßt. Die Stromversorgung speist auch ein Testfeld 30, das über eine Testfeldanpassung 31 mit dem Prozeßrechner 25 in Verbindung steht und dazu dient, den Prozeßrechner 25 zu betreiben. Ein weiterer Anpassungsbaustein 32 übernimmt die Anpassung für einen äußeren Lochkarteneingang 33. Noch ein anderer Anpassungsbaustein 34 gestattet die Programmierung des Rechners mit Magnetplatten 35 (Floppy Disk). Über einen weiteren Anpassungsbaustein 36 ist der Prozeßrechner 25 mit Ein- und Ausgabeblattschreiber 37 verbunden.

Der Prüfrechner 2 umfaßt ferner eine Rechner-Rangierung 40, die zur Rangierung dient. Sie ist mit dem Prozeßrechner 25 über vier 16-Bit-Leitungen 41 in Ausgaberichtung und drei 16-Bit-Leitungen 42 in Eingaberichtung verbunden. Außerdem ist die Rechner-Rangierung 40 über ein Anpassungsglied 43 mit dem Prozeßrechner 25 verbunden, das dem nach Fig. 1 am Peripheriegerät 10 vorgesehenen Blattschreiber zugeordnet ist.

Von der Rechner-Rangierung 40 geht das Kabel 21 aus, das zum Peripheriegerät 10 führt. Es ist mit 5 x 24 Adern ausgeführt und führt zu den einzelnen Plätzen der redundant angeordneten Prüflinge.

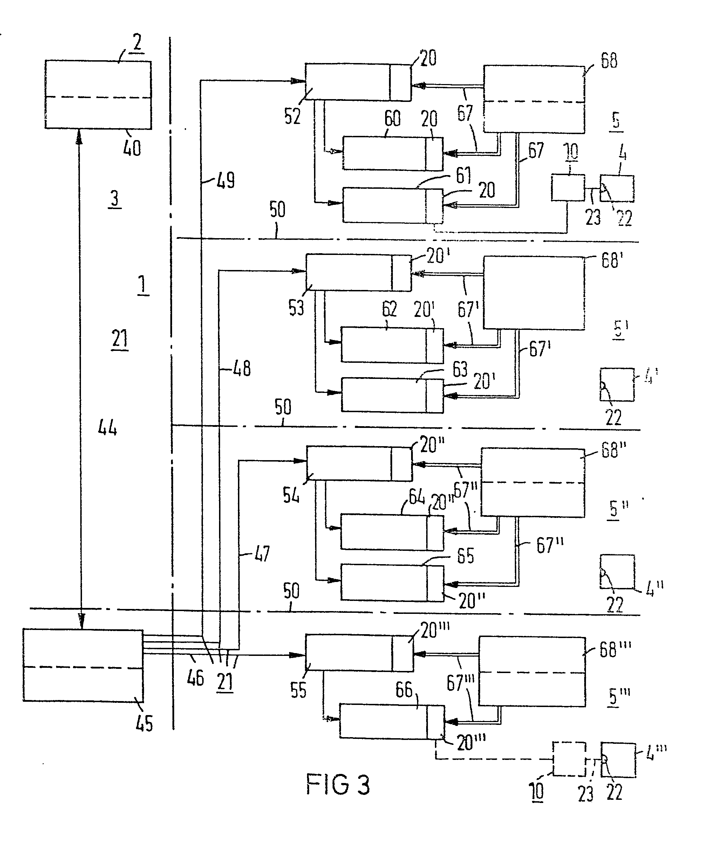

Die Fig. 3 zeigt den Aufbau der Steckanschlüsse 20 und des vieladrigen Kabels 21, das die Busleitungen für Adressen, Daten und Steuersignale enthält. Ein Teilstück 44 des Kabels 21 führt von der Rechner-Rangierung 40 im Prüfrechner 2 zum Schutzbaustein 45. Der Schutzbaustein 45 hat die Aufgabe sicherzustellen, daß auf dem Weg vom Prüfrechner 2 zu den Prüflingen keine Fehlspannungen eingekoppelt werden, die die Prüfung beeinträchtigen oder verfälschen. Vor allem soll der Schutzbaustein 45 verhindern, daß durch Überspannungen Zerstörungen am Schutzrechner 2 oder an den Prüflingen auftreten.

Mit dem Schutzbaustein 45 sind über vier Kabel 46, 47, 48 und 49, die in Fig. 1 dem zum Steckplatz 20 führenden Kabel 21 entsprechen, die einzelnen Prüflinge zu erreichen, obwohl diese, wie die Fig. 3 zeigt, räumlich getrennt bei 5, 5', 5" und 5''' angeordnet sind. Die Trennwände sind durch die strichpunktierten Linien 50 angedeutet.

Die einzelnen Kabel 46 bis 49 enden in gleicher Weise an jeweils einem Verteiler 52, 53, 54 und 55. Mit diesen werden die einzelnen Endplätze 60, 61, 62, 63, 64, 65 und 66 verbunden. Verteiler 52 bis 55 und Endplätze 60 bis 66 enthalten Steckbuchsen 20, 20', 20",
20"' in vieladriger Anordnung (Einsteckplätze), in
die die Stecker der am Peripheriegerät 10 vorgesehenen
Enden des Kabels 21 zur Steuerung des Peripheriegeräts
10 eingesteckt werden können. Aus den Schrankeinspeisungen 68, 68', 68" und 68"', die über Dioden entkoppelte Batterien umfassen, werden Stromversorgungsleitungen 67, 67', 67" und 67"' zu den Einsteckplätzen 20
geführt, ohne daß Redundanzgrenzen überschritten werden.
Auf diese Weise kann, wie in der Fig. 3 zu sehen ist,
das Peripheriegerät 10 an den Stellen 5, 5', 5" und
5"' aufgestellt und mit einem der an dieser Stelle vorhandenen gleichwertigen Steckplätze 20, 20',20" oder
20"' verbunden werden. Die Verbindung zwischen Peripheriegerät 10 und Prüfling 4, 4', 4" oder 4"' erfolgt dabei über die aus der Fig. 1 ersichtlichen drei parallelen Kabel 23, die in die Steckplätze 22 eingesteckt
werden.

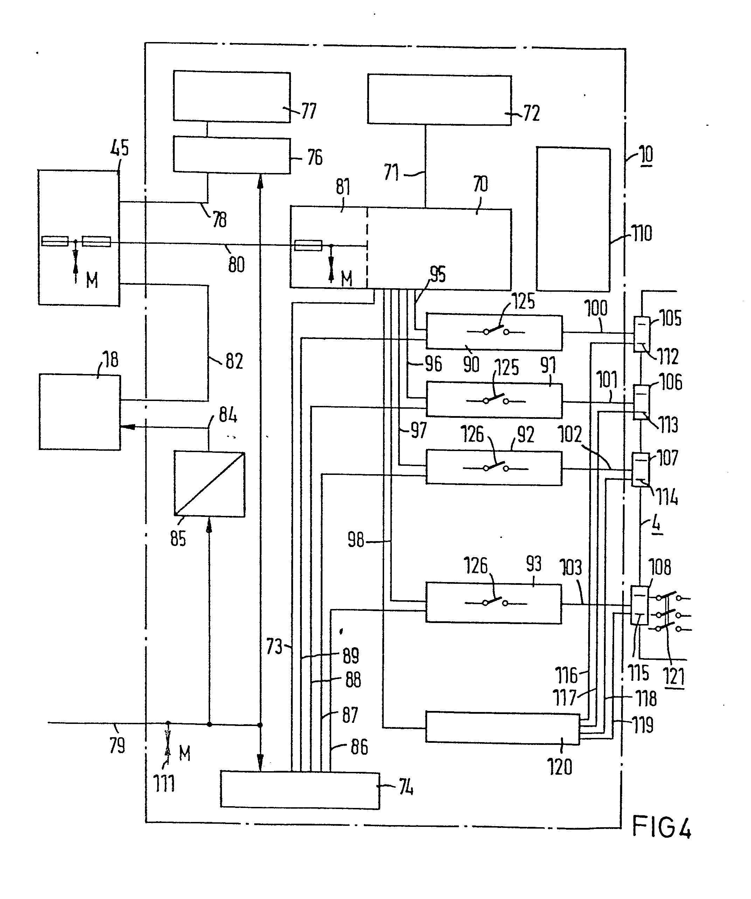

Das vereinfachte Blockschaltbild des Peripheriegerätes 10 nach Fig. 4 zeigt, daß zu diesem ein Steuerwerk 70 gehört. Dieses Steuerwerk kann zum Beispiel ein
Mikrocomputer sein. Es ist über eine interne Leitung 71
mit einer Handsteuerung 72 verbunden, über die ein Prüfling unabhängig vom Prüfrechner 2 und dem automatischen
Prüfprogramm schrittweise angesteuert werden kann. Das
Steuerwerk ist über eine Leitung 73 mit einem Versorgungsbaustein 74 verbunden, der die Stromversorgung
aller Elemente des Peripheriegerätes 10 übernimmt.

Die Stromversorgung 74 speist auch einen Anpassungsbaustein 76, der mit einem Rechnerbedienfeld 77 in
Verbindung steht. Mit dem Rechnerbedienfeld kann der
Ablauf eines Prüfprogramms gesteuert werden, zum Beispiel Start, Stop, Einzelschritt usw.. Das Rechnerbedienfeld 77 steht über eine Leitung 78 mit dem
äußeren Schutzbaustein 45 in Verbindung, der über eine
Leitung 80 auch mit dem durch einen Schutzbaustein 81
gesicherten Eingang des Steuerwerkes 70 in Verbindung
steht. Der Schutzbaustein 45 ist über eine Leitung 82
mit dem Blattschreiber 18 verbunden. Zu diesem führt
noch eine Leitung 84, die über einen Umsetzbaustein 85
die Stromversorgung des Blattschreibers 18 sicherstellt. Die Verbindungen 21 des Peripheriegerätes 10
über den Schutzbaustein 45 zum Prüfrechner 2 werden
durch Einstecken der vieladrigen, am Ende mit Steckern
versehenen Leitungen 78, 80 und 82 und des gegen die
Übertragung von Spannungsspitzen durch Suppressordioden 111 geschützten Stromversorgungskabels 79
in einen der in Fig. 3 dargestellten Einsteckplätze 20,
20', 20" und 20"' hergestellt.

Mit der Stromversorgung 74 sind über Leitungen 86, 87,
88 und 89 zwei Binärkanäle 90 und 91 für das Lesen und
Einspeisen von 256 Binärsignalen sowie zwei Analogkanäle 92 und 93 verbunden, die für das Lesen von 256 und
das Einspeisen von 128 Analogsignalen ausgebildet
sind. Die Kanäle 90 bis 93, die die in den Prüfling 4
eingespeisten Signale speichern können, stehen über
Leitungen 95, 96, 97 und 98 mit dem Steuerwerk 70 in
Verbindung. Sie besitzen ferner Schalter 125, 126, die
die Einspeiseleitungen in den Prüfling 4 (Kabel 100
bis 103) einzeln oder gemeinsam durch RESET-Signal
öffnen. Die jeweils vier vieladrigen Prüfkabel 100,
101, 102 und 103 entsprechen den Kabeln 23 nach
Fig. 1 und vermitteln mit Prüfsteckern 105, 106, 107
und 108 den Anschluß zum Prüfling 4.

Die Prüfstecker besitzen Kennungsstifte 112 bis 115, über die Verriegelungsleitungen 116 bis 119 geschleift sind. Diese führen zu einem Kennungsbaustein 120, der über das Steuerwerk 70 mit dem Prüfrechner 2 in Verbindung steht. Im Prüfling 4, 4' usw. ist an die Verriegelungsleitung 116 bis 119 jeweils ein Schalter 121 angeschlossen, der mehrere Kontakte aufweist. Mit einem von diesen kann der normale Ausgang des Prüflings gesperrt werden. Mit einem weiteren kann in einer Warte eine Anzeige erfolgen, während gleichzeitig der Rechner 2 ein Freigabesignal für die Prüfung erhält. Die Prüfstecker 105 bis 108 werden dann, wenn das Peripheriegerät 10 nicht in Betrieb ist, sondern zum Beispiel von einem Prüfort 10 zum anderen 10' bewegt wird, in einen sogenannten Prüfplatz 110 eingesteckt. In dieser Ruheposition der Prüfstecker wird eine interne Prüfung der Funktionen des Peripheriegerätes 10 vorgenommen, wenn die Verbindung mit dem Prüfrechner 2 vorliegt.

Mit dem Peripheriegerät 10 ergibt sich folgender Ablauf einer Prüfung:
Vor Beginn einer Prüfung befinden sich die Prüfstecker 105 bis 108 in einer Ruheposition (Prüfplatz 110), die gleichzeitig zur Selbstüberwachung des Testautomaten dient. Nach dem Einschieben der Stecker 105 bis 108 in die Steckplätze 22, die durch eine Kennung eindeutig definiert und unverwechselbar sind, sowie nach einer Freigabe, die gleichzeitig den normalen Ausgang des Prüflings sperrt und die die Prüfung in der Warte des Kernkraftwerkes meldet, beginnt die Prüfung mit Hilfe des Prüfrechners 2. Während dieser automatischen Prüfung eintretende Ereignisse werden auf dem Ausgabe-Blattschreiber 16 protokolliert, der am Fahrgestell befestigt ist, gegebenenfalls auch auf einem weiteren Blattschreiber 37 im Rechnerraum 3.

VPA 79 P 9 3 4 6 EUR

Die Rechenschaltungen im Analogteil des Schutzsystems werden durch Vorgabe von Analogsignalen geprüft. Die Prüfung der Zeitstufen im Relaisteil des Schutzsystems (im Notspeisegebäude) wird nicht durch den Testautomaten ausgelöst. Er protokolliert die von der Reaktorschutz-Tafel angeregten Prüfvorgänge und überwacht dabei den Ablauf der Zeitstufen. Die Prüfung der Begrenzungsfunktionen erstreckt sich von den Eingangssignalen bis zur Betätigung einzelner Stäbe. Die Ansteuerung anderer Stellglieder erfolgt bis zum 2 von 4-Abschlußbaustein. Die Betätigung von Stellgliedern erfolgt durch Handeingriff.

Die Prüfprogramme bestehen aus einer Folge von Prüfanweisungen, die in der Programmsprache SIETAL, einer Untermenge der Sprache ATLAS, formuliert werden. Für jede (redundante) Funktion wird ein Prüfprogramm erstellt, das vom Betreiber des REAL-Testautomaten im Dialogverkehr einer geänderten Schaltung oder erweiterten Prüfauflage angepaßt werden kann.

11 Patentansprüche
4 Figuren

Patentansprüche

1. Prüfeinrichtung zum Prüfen der Funktionen elektronischer Meß-, Regel- und Schutzeinrichtungen (Prüfling), die in einem Kraftwerk, insbesondere einem Kernkraftwerk, in mehrkanalig redundanter Anordnung räumlich getrennt untergebracht sind, mit einem Rechner, d a - d u r c h   g e k e n n z e i c h n e t, daß zwischen dem Rechner (2) und dem Prüfling (4) ein transportables Peripheriegerät (10) angeordnet ist, das mit dem Prüfling (4) über ein mit Steckern (105 bis 108) versehenes Kabel (23) verbunden ist, daß das Peripheriegerät (10) mit dem Rechner (2) zur Übertragung eines Prüfprogramms über ein Bus-System (21) mit mindestens einem Adressen- und mindestens einem Datenbus und mit Überspannungsschutzeinrichtungen (45) verbunden ist und eine Protokollierungseinrichtung (18) für das Prüfprogramm aufweist, daß das Peripheriegerät (10) einen Speicher (Kanäle 90 bis 93) enthält, der den Stand des Prüfprogramms beim Auftreten eines Fehlers festhält, und daß im Peripheriegerät (10) handbetätigte Steuermittel (Bedienfeld 14) zur schrittweisen Prüfung des Prüflings (4) bei Unterbrechung des Prüfprogramms vorgesehen sind.

2. Prüfeinrichtung nach Anspruch 1, d a d u r c h   g e k e n n z e i c h n e t, daß die dem Prüfling (4) zugeordneten Stecker (105 bis 108) mindestens einen Kennungsstift zur Übertragung eines codierten Kennungssignals aufweisen.

3. Prüfeinrichtung nach Anspruch 2, d a d u r c h   g e k e n n z e i c h n e t, daß über den Kennungs-stift (112 bis 115) eine Verriegelungsleitung (116 bis 119) geschleift ist, die über einen Schalter (121) zur Sperrung des normalen Ausgangs des Prüflings (4) führt und daß die Verriegelung die Prüfung bis zu einem Freigabesignal verhindert, das nach der Sperrung des Ausgangs gegeben wird.

4. Prüfeinrichtung nach Anspruch 3, d a d u r c h g e k e n n z ei c h n e t, daß dem Kennungsstift (112 bis 115) in einer Warte eine Anzeigevorrichtung zugeordnet ist, die die Freigabe anzeigt.

5. Prüfeinrichtung nach einem der Ansprüche 1 bis 4, d a d u r c h g e k e n n z e i c h n e t, daß in allen zur Einspeisung von Prüfsignalen dienenden Verbindungsleitungen (Kabel 100 bis 103) zwischen dem Peripheriegerät (10) und dem Prüfling (4) ein Schalter (125, 126) angeordnet ist, und daß die Schalter (125, 126) bei einer Störung im Peripheriegerät (10) oder im Rechner (2) öffnen.

6. Prüfeinrichtung nach Anspruch 5, d a d u r c h g e - k e n n z e i c h n e t, daß die Schalter (125, 126) im Peripheriegerät (10) angeordnet sind.

7. Prüfeinrichtung nach einem der Ansprüche 1 bis 6, d a d u r c h g e k e n n z e i c h n e t, daß der Rechner (2) mit den einzelnen Stellen (5, 5', 5.", 5''') der räumlich getrennten Prüflinge (4, 4', 4", 4''') über Kabel (21) verbunden ist, die in Steckplätzen (20) für den Anschluß des Peripheriegerätes (10) an dieser Stelle enden.

8. Prüfeinrichtung nach Anspruch 7 für vierfach redundant vorgesehene Prüflinge, g e k e n n z e i c h n e t d u r c h ein einziges Peripheriegerät (10).

9. Prüfeinrichtung nach einem der Ansprüche 1 bis 8, d a d u r c h g e k e n n z e i c h n e t, daß das Peripheriegerät (10) in einem Fahrgestell (12) angeordnet ist, dessen Deckplatte (13) ein Bedienfeld (77) für automatischen Prüfbetrieb und ein Bedienfeld für Handbetrieb (72) aufweist, dessen Tastatur (14) an den dem Prüfling (4) zugeordneten Steckern (105 bis 108) Testspannungen einzuspeisen oder abzufragen gestattet.

10. Prüfeinrichtung nach Anspruch 9, d a d u r c h g e k e n n z e i c h n e t, daß die Deckplatte (13) einen Blattschreiber (18) als Protokollierungseinrichtung trägt.

11. Prüfeinrichtung nach einem der Ansprüche 1 bis 10, d a d u r c h g e k e n n z e i c h n e t, daß das Peripheriegerät (10) Steckplätze (110) für die dem Prüfling (4) zugeordneten Stecker (105 bis 108) aufweist, und daß diesen Steckplätzen (110) eine Überwachungsschaltung zugeordnet ist, die beim Einstecken der Stecker (105 bis 108) wirksam wird.

FIG1

FIG 2

FIG 3

4/4          79 P 9346

FIG 4

Europäisches
Patentamt

**EUROPÄISCHER RECHERCHENBERICHT**

| | EINSCHLÄGIGE DOKUMENTE | | KLASSIFIKATION DER ANMELDUNG (Int Cl³) |
|---|---|---|---|
| Kategorie | Kennzeichnung des Dokuments mit Angabe, soweit erforderlich, der maßgeblichen Teile | betrifft Anspruch | |
| | DE - A1 - 2 622 120 (ROCKWELL) <br> + Fig. 1,2,3; Seiten 1-4 + <br> -- | 1 | G 21 D 3/04 <br> G 21 C 17/00 |
| X | DE - A - 2 321 583 (ROCKWELL) <br> + Fig. 1-3; Patentansprüche + <br> -- | 1,3,4, 5,6,7, 8,9 | |
| | DE - A - 2 316 432 (WESTINGHOUSE) <br> + Fig. 1,4; Ansprüche + <br> -- | 1,3 | |
| | DE - A - 2 156 541 (INTERATOM) <br> + Ansprüche; Fig. + <br> -- | 1,3 | RECHERCHIERTE SACHGEBIETE (Int. Cl³) |
| | DE - A - 2 149 799 (BABCOCK & WILCOX) <br> + Fig. 3; Seiten 8-17 + <br> -- | 1 | G 21 C 17/00 <br> G 21 D 3/00 <br> G 06 F 15/00 <br> A 61 B 5/00 |
| P | US - A - 4 170 754 (SCHMITZ) (09-10-1979) <br> + Fig. 2 + <br> -- | 2,7 | |
| | US - A - 3 953 834 (BURKETT) <br> + Fig. 1 + <br> ---- | 1 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | . Der vorliegende Recherchenbericht wurde für alle Patentansprüche erstellt. |
|---|---|

| Recherchenort | Abschlußdatum der Recherche | Prüfer |
|---|---|---|
| WIEN | 03-12-1980 | KRAL |

EPA form 1503.1  08.78

**BAD ORIGINAL**